# EUROPEAN PATENT SPECIFICATION

(11) **EP 3 420 866 B1**
(45) Date of publication and mention of the grant of the patent: **28.04.2021**
(21) Application number: 17189564.2
(22) Date of filing: 06.09.2017
(51) Int. Cl.: A47J 43/07, A47J 43/08

(54) **SMALL FOOD CUTTING AND BLENDING DEVICE**
KLEINE LEBENSMITTELSCHNEID- UND MISCHVORRICHTUNG
PETIT DISPOSITIF DE DÉCOUPE ET DE MÉLANGE DE PRODUITS ALIMENTAIRES

(30) Priority: 26.06.2017 HK 17106326
(43) Date of publication of application: 02.01.2019
(73) Proprietor: Wong, Yan Kwong, Kowloon (HK)
(72) Inventor: Wong, Yan Kwong, Kowloon (HK)
(74) Representative: Cabinet Chaillot

(56) References cited:
- WO-A1-99/12458
- DE-A1-102009 003 249
- GB-A- 2 465 834
- GB-A- 2 508 236
- US-A1- 2015 374 175

## Description

### [TECHNICAL FIELD]

The present invention relates to the field of kitchens, particularly to a small food cutting and blending device which may rotate by various means to cut food and may add and blend seasoning sauces.

### [DESCRIPTION OF THE BACKGROUND]

People often need to use a variety of sauces when preparing food. One of the popular methods for preparing a sauce is to cut up vanilla and other ingredients and then add different juices. During preparation of a sauce, typically we need to cut up vanilla and grind it so that juice flows out of it. The juice of vanilla may be used as a basic ingredient of sauce. People may add other seasonings, such as: olive oil, white granulated sugar and vinegar into the sauce according to their flavor preferences.

The work of cutting up vanilla is tedious and juice might splash on clothes during cutting and grinding of vanilla, causing great inconvenience to the people. For this reason, people have developed a rolling-type food processor. The housing of the processor forms a cavity in which a blade component and a roller component are arranged. The roller component comprises two opposite rollers arranged on the bottom of the housing and rollable on a table top. A driving gear is provided on the roller component and a driven gear is provided on the blade component. The driving gear engages with the driven gear. Moreover, the blade component further comprises a blade connected to the driven gear in a fixed manner. When the rollers rotate, the driving gear will rotate together with the rollers to drive the rotation of the driven gear, which will drive the blade to rotate in the cavity.

When you need to cut up food, you may put the food, vanilla for example, into the cavity and then roll the rollers, thereby driving the blade to rotate in the cavity to cut up the food in the cavity. However, such food processor can cut up food only after the rollers roll, while the rolling of the rollers needs a long distance, so the use is inconvenient and limited. Moreover, it can process solid food only. Besides, when this food processor is cutting food, the cover of the housing must be locked to prevent overflow of the food in the cavity, but once the cover is locked, the user will be unable to add seasonings into the cavity, so the function is singular.

GB patent GB2508236 A discloses a food processor provided with an electric motor, so that it cannot be used without electric power.

American patent US 2015/374175 A1 discloses a small food cutting and blending device with a knife rest component and a gear component comprising a gear surface cover, a gear bottom surface and at least one transmission gear that cooperates with a circle of teeth engaged circumferentially on the inner wall of a chassis.

### [SUMMARY OF THE INVENTION]

The main object of the present invention is to provide a small food cutting and blending device, which may rotate by various means to cut up food and may conveniently add and blend seasonings and/or sauces during or after cutting of the food.

In order to realize the foregoing main object, the small food cutting and blending device provided by the present invention comprises a container with an open upper end, a botton wall and a cylindrical shaft sleeve arranged in the middle of the bottom wall, a knife rest component inside the container, the knife rest component is arranged inside the container and comprises a scraper and a knife rest, the knife rest comprising a cylindrical body with a plurality of blades being arranged on the peripheral wall of the body at different height; a surface cover component mounted at the upper end of the container in a detachable; a gear component comprising at least one transmission gear and fixed under the container for driving the knife rest component, the gear component comprising a gear surface cover and a gear bottom cover attached to the gear surface cover, the at least one transmission gear being mounted between the gear bottom cover and the gear surface cover; a chassis with a circle of teeth arranged circumferentially on the inner wall of the chassis, the teeth being engaged with the at least one transmission gear so that the chassis is connected under the container and can rotate relative to the container

The gear component further comprises a center shaft. Teeth are arranged on the bottom of the center shaft and between the gear bottom cover and the gear surface cover and engage with the transmission gear. A transmission part is arranged on the top of the center shaft, passes a through hole in the middle of the gear surface cover and a through hole on the bottom of the container in turn, enters the container, and is fixed and connected to the knife rest component in a detachable manner; the surface cover component is provided with a handle at its upper end, the handle having a through hole communicated with the inner chamber of the container; and wherein a plurality of evenly distributed keyholes are circumferentially arranged adjacent to the edge of the gear surface cover and a plurality of corresponding lock latches are arranged on the bottom surface of the container, every lock latch being coupled with a keyhole, thereby fixing the gear surface cover to the bottom of the container.

Further, preferably, the gear component includes four transmission gears, which are arranged on the gear bottom cover. There is a gap between every two adjacent transmission gears, and every transmission gear engages with the teeth of the center shaft.

Further, preferably, anti-skid patterns are arranged on the external surface of the chassis.

Still further, preferably, the surface cover component comprises a surface cover and a top cover coupled under the surface cover, and the handle is arranged on the surface cover; the surface cover component further comprises a through hole, which is located at the lower end of the handle and runs through the surface cover and the top cover.

Still further, preferably, the handle is in a shape of trumpet and has an open external end of which area is greater than the area of the bottom end of the handle.

The knife rest component comprises a cylindrical knife rest with a plurality of blades and a cleaning scraper preferably with scraping pieces. The cleaning scraper is fixed under the surface cover component in a detachable manner and connected to the knife rest and rotates together with the knife rest.

A first transmission side is arranged at the upper end of the knife rest, and a second transmission side coupled with the first transmission side is arranged at the lower end of the cleaning scraper.

Besides, a shaft sleeve is arranged in the middle of the container. It is a hollow structure with two open ends, the opening of the bottom end is throughout the bottom of the container, the knife rest is mounted outside the shaft sleeve, and the transmission part of the center shaft is fixed inside the knife rest.

Still further, preferably, there is also an anti-wear sleeve comprising a cylindrical body and an annular flange extended outwardly from the upper end edge of the cylindrical body in a radial direction. The outer diameter of the annular flange is greater than the outer diameter of the shaft sleeve and smaller than the inner diameter of the cylinder of the knife rest. The body of the anti-wear sleeve is stored in the shaft sleeve and allows the transmission part of the center shaft to pass through freely. The annular flange is maintained at the top end of the shaft sleeve to from a gap between the inner wall of the cylindrical knife rest and the outer wall of the shaft sleeve

In addition, preferably, a plurality of evenly distributed convex arrises are arranged on the inner wall of the container, and protrude inwardly from the inner wall of the container in a radial direction. Preferably, the peripheral wall of the container is made of transparent material.

As described above, the surface cover component of the small food cutting and blending device provided by the present invention is connected to a container in a fixed manner, and a chassis may rotate relative to the container. In this way, when a user holds the handle and rotates the surface cover component, the container will rotate with the surface cover component, and drive the gear component to rotate, the gear bottom cover of the gear component to rotate, and the transmission gear on the gear bottom cover to rotate relative to the chassis. Now, the transmission gear engages with a toothed rail and rotates around its own axis, thereby driving a transmitting gear to rotate. The rotation of the transmitting gear will drive the center shaft to rotate, thereby driving the knife rest to rotate. The blades will rotate around the axis of the knife rest and inside the container, thereby cutting up vanilla and other food materials.

If the user rotates the chassis only, the rotation of the chassis will drive the transmission gear to rotate, thereby driving the transmitting gear and the center shaft to rotate, further driving the rotation of the knife rest and realizing food cutting operation. Therefore, by rotating the handle, or the chassis, or both at the same time, the user may realize rotation of the knife rest, thereby cutting of food.

Besides, a through hole is arranged at the handle. Preferably, the handle is in a shape of a trumpet, large at the top and small at the bottom, and a through hole is at the lower end of the trumpet. In this way, the user may add olive oil, white granulated sugar, vinegar and other seasonings into the container via the through hole at the handle. As the cross section area of the through hole is small, the juice formed after the vanilla is cut up and the seasonings added to the container will not flow out from the through hole easily, making for user's addition of seasonings.

In addition, preferably, a cleaning scraper is arranged under the surface cover component. It may scrape off the food under the top cover, prevent the food from being accumulated under the top cover and not being cut up, and facilitate sufficient cutting of the food. Moreover, the cleaning scraper may rotate together with the knife rest and may ensure the food on the top cover is scraped off in time while the blades on the knife rest are cutting the food, thereby effectively avoiding accumulation of food under the top cover.

Besides, preferably, an anti-wear sleeve is arranged on the shaft sleeve of the container and a flange is arranged at the upper end of the anti-wear sleeve to form a gap between the inner wall of the knife rest and the outer wall of the shaft sleeve to avoid damage of the shaft sleeve and the center shaft caused by frequent friction and lengthen the service life of the sleeve and the center shaft.

Moreover, preferably, four transmission gears distributed in a shape of rectangle are provided on the gear bottom cover so that the transmitting gear evenly receives the driving force generated from the engagement of the four transmission gears, and the transmission gears are stressed more evenly and rotate more stably.

The arrangement of a plurality of convex arrises on the inner wall of the container may avoid the food inside the container from rotating in the rotating direction of the knife rest so that the food falls to the areas accessible to the blades and can be sufficiently and more effectively cut up. In order that the user can better observe the situation inside the container, the peripheral wall of the container is designed to be transparent. In this way, the user may observe the cutting condition of food and the stirring condition of seasonings.

### [BRIEF DESCRIPTION OF THE DRAWINGS]

FIG. 1 is a structural schematic view of an embodiment of the small food cutting and blending device provided by the present invention.
FIG. 2 is a structural schematic view of the small food cutting and blending device shown in FIG. 1 at an alternative visual angle.
FIG. 3 is an exploded structural view of the small food cutting and blending device shown in FIG. 1.
FIG. 4 is a structural schematic view of a surface cover component.
FIG. 5 is a structural schematic view of a surface cover component at an alternative visual angle.
FIG. 6 is an exploded structural view of a surface cover component and a cleaning scraper.
FIG. 7 is a structural schematic view of a container and a gear surface cover.
FIG. 8 is a partially sectioned structural schematic view of a container and a chassis after a gear component is mounted.
FIG. 9 is a partially sectioned structural schematic view after the container is assembled with a gear component and a chassis.
FIG. 10 is an exploded structural view of a surface cover component, a knife rest and a cleaning scraper.

The present invention now will be further described by referring to the accompanying drawings and embodiments.

### [DETAILED DESCRIPTION OF PREFERRED EMBODIMENTS]

The small food cutting and blending device provided by the present invention may be used to cut up various food materials, such as: vanilla, without electric power. It cuts up food by manually operating the rotating device and has various rotation modes. The small food cutting and blending device provided by the present invention mainly comprises: a container, a chassis connected to the bottom of the container in a rotatable manner, a gear component, which is under the container and connected to the chassis in a rotatable manner, and a knife rest component, which is inside the container and connected to the gear component.

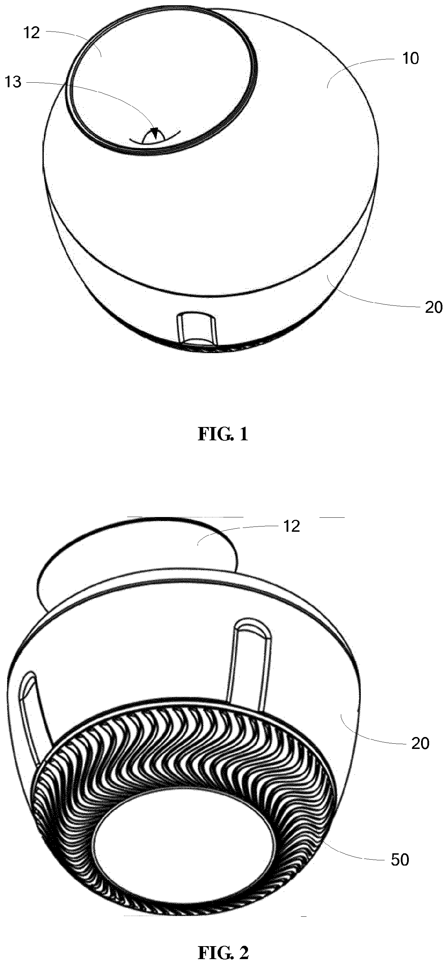

As shown in FIG. 1 and FIG. 2, this embodiment of the small food cutting and blending device comprises a surface cover component 10 and a container 20 under the surface cover component 10. In this embodiment, the surface cover component 10 is mounted above the container 20 in a detachable manner and may be locked to or unlocked from the container 20. When the container 20 or the surface cover component 10 rotates, it will drive the other to rotate synchronously. A handle 12 is arranged at the upper end of the surface cover component 10 and a chassis 50 is arranged under the container 20 and may rotate relative to the container 20. Therefore, a user may hold the handle 12 and rotate the surface cover component 10 to drive the container 20 to rotate. In this way, the container 20 will rotate relative to the chassis 50. Alternatively, the user may also realize relative rotation between the chassis 50 and the container 20 by holding the handle 12 and not moving it, but rotating the chassis 50.

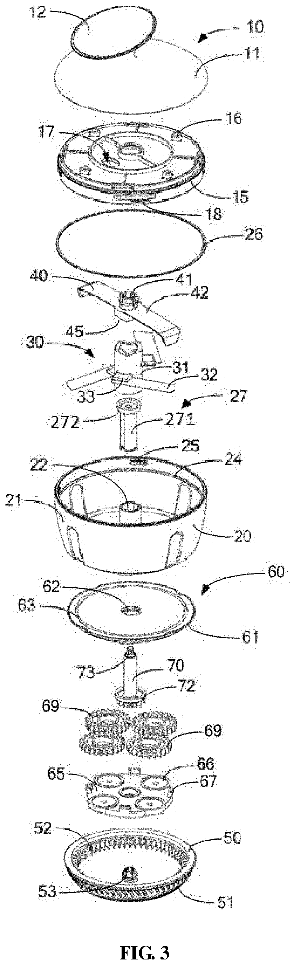

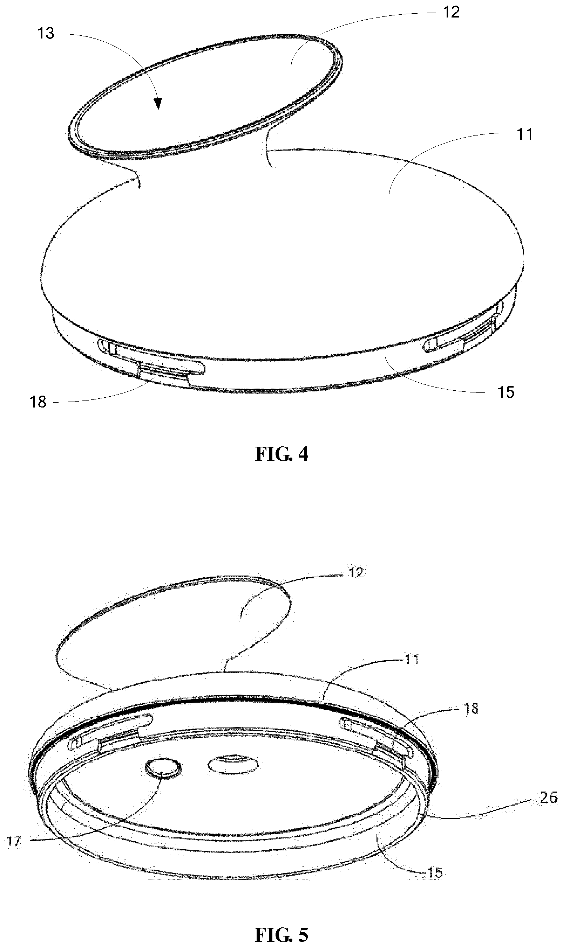

As shown in FIG. 3, the surface cover component 10 comprises a surface cover 11 and a top cover 15 fixed under the surface cover 11, and a handle 12 is arranged at the upper end of the surface cover 11. As shown in FIG. 4 and FIG. 5, the handle 12 is in a shape of trumpet and has a through hole 13 at its lower end, the external end of the handle 12 is open, and the area of the external end of the handle 12 is greater than the area of its bottom end. In other words, the handle 12 has a larger opening at its top end so that users may easily add olive oil, white granulated sugar, vinegar and other seasonings into the container 20 via this opening.

A through hole 17 is arranged on the top cover 15, runs through the upper and lower surfaces of the top cover 15 and adjoins and communicates with a through hole 13 of the surface cover 11. In this way, the through hole 13 of the surface cover 11 and the through hole 17 of the top cover 15 jointly form a through hole running through the surface cover component 10, and the seasonings added from the opening at the top end of the handle 12 may enter the container 20 via these two communicated through holes.

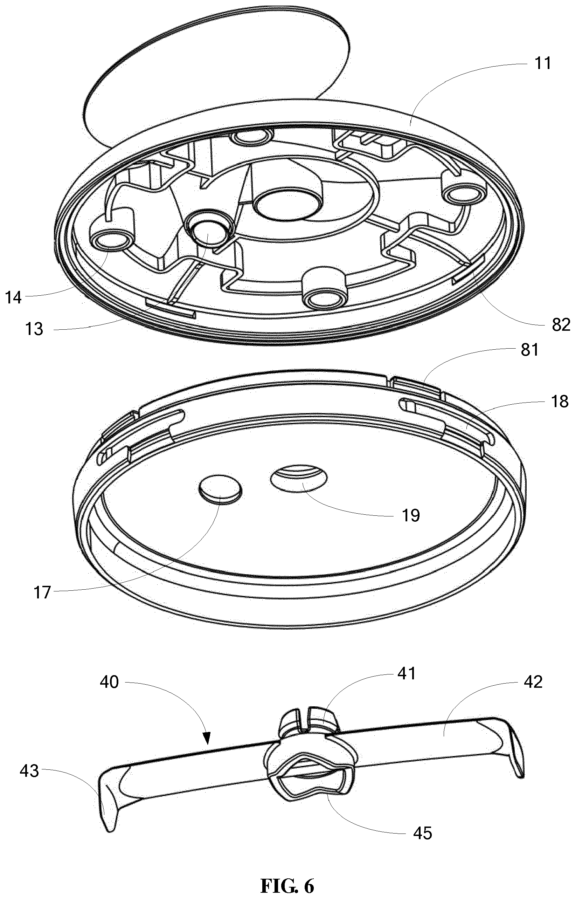

As shown in FIG. 6, a plurality of locating holes 14 are arranged on the bottom surface of the surface cover 11. As shown in FIG. 3, a plurality of locating columns 16 extended upwardly from the upper surface of the top cover are arranged on the upper surface of the top cover 15. When the surface cover 11 is mounted on the top cover 15, each locating hole 14 is coupled on one locating column 16. Besides, a plurality of coupling slots 82 are arranged on the inner wall of the surface cover 11, a corresponding number of buckles 81 are arranged on the upper circumference of the top cover 15, every buckle 81 may be coupled into a coupling slot 82, thereby fixing the top cover 15 under the surface cover 11 in a fixed manner. In this way, when the handle 12 rotates, it will drive the surface cover 11 and the top cover 15 to rotate together. Preferably, a plurality of coupling slots 82 are evenly distributed circumferentially on the surface cover 11, and a plurality of buckles 81 are evenly distributed circumferentially on the top cover 15.

As shown in FIG. 3, the container 20 is a bowl-shaped body with an open upper end. Preferably, the peripheral wall 21 of the container 20 is made of transparent material, such as: transparent polymethyl methacrylate (PMMA) or glass to make for user's observation of food cutting condition during operation. A cylindrical shaft sleeve 22 extended upwardly from the bottom wall is arranged in the middle of the container 20. Preferably, the shaft sleeve 22 forms an integral body with the container and is a hollow structure with two open ends, and its bottom opening is throughout the bottom of the container. Besides, an annular boss is arranged on the inner wall of the container 20 and adjacent to the upper end, and is for installation of the top cover 15. A plurality of lock latches 25 are arranged on the inner edge of the open end of the container 20, a plurality of corresponding locking grooves 18 are arranged on the external peripheral wall of the top cover 15, and every lock latch 25 is locked inside a locking groove 18, thereby realizing locking between the top cover 15 and the container 20. In order to prevent the sauce inside the container 20 from flowing out from the gap between the container 20 and the top cover 15, a seal ring 26 is arranged at the lower end of the top cover 15 and clamped between the top cover 15 and the container 20. The seal ring 26 may be made of rubber or other materials

A plurality of evenly distributed convex arrises 24 are arranged on the inner wall of the container 20, and inwardly protrude from the inner wall of the container 20 in a radial direction. In this way, when vanilla and other food materials inside the container 20 are cut up, the convex arrises 24 may stop the food from rotating in the rotation direction of the knife rest 30 to some extent, thereby facilitating sufficient cutting and better cutting effect of the food.

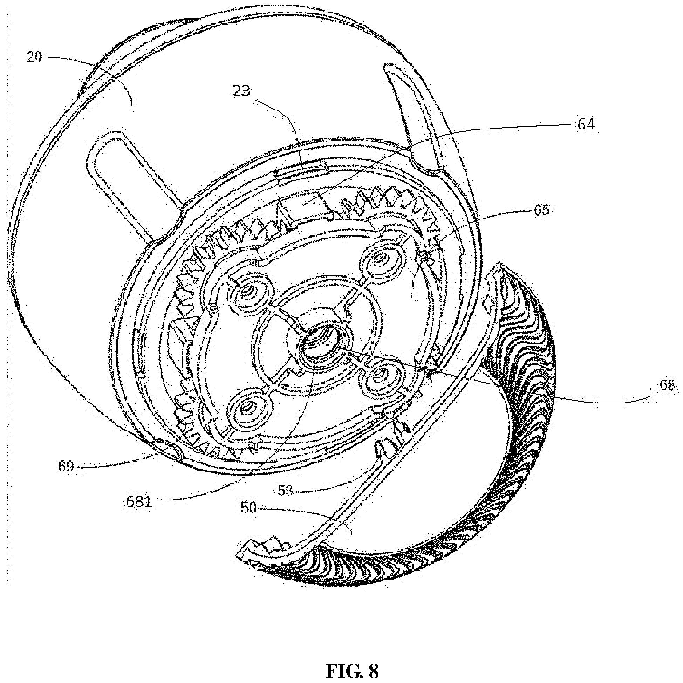

A gear component 60, which has at least one transmission gear, is arranged under the container 20. In this embodiment, the gear component 60 comprises a gear surface cover 61, a gear bottom cover 65, and a plurality of transmission gears 69 between the gear surface cover 61 and the gear bottom cover 65. As shown in FIG. 3 and FIG. 8, a through hole 62 is arranged in the middle of the gear surface cover 61 and corresponds to the through hole on the bottom of the container 20, and a plurality of lock latches 64 are arranged on the lower surface of the gear surface cover 61. On the gear bottom cover 65, a corresponding number of gear seats 66 are arranged, and each of the transmission gears 69 is mounted on a gear seat 66 and may rotate around its own axis on the gear seat 66. In this embodiment, a plurality of transmission gears 69 are not engaged with each other. That is to say, there is a gap between two adjacent transmission gears 69, so the rotation of a transmission gear 69 will not directly drive the rotation of another transmission gear 69. A plurality of spring bolts 67 coupled with the lock latches 64 on the lower surface of the gear surface cover 61 are arranged on the upper surface of the gear bottom cover 65 and each of the spring bolts 67 may be locked inside one of the lock latches 64, thereby realizing fixation between the gear surface cover 61 and the gear bottom cover 65, without hindering the rotation of every gear between the gear surface cover 61 and the gear bottom cover 65.

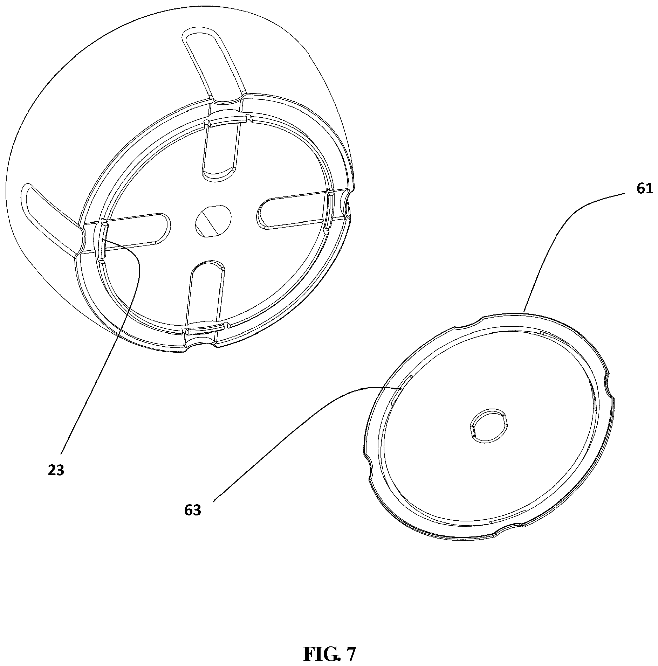

As shown in FIG. 7 and FIG. 8, a plurality of evenly distributed keyholes 63 are circumferentially arranged in the location adjacent to the edge of the gear surface cover 61, a plurality of corresponding lock latches 23 are arranged on the bottom surface of the container 20, and every lock latch 23 is coupled with a keyhole 63, thereby fixing the gear surface cover 61 to the bottom of the container. When the container 20 rotates, it will drive the gear surface cover 61 to rotate. As the gear surface cover 61 is fixed with the gear bottom cover 65, the gear bottom cover 65 will rotate together with the container 20.

According to an alternative that does not fall under the scope of the claims, the foregoing gear surface cover 61 may be formed on the bottom of the container 20 in an integral manner.

The gear component 60 further comprises a center shaft 70, and teeth 72 are arranged on the bottom of the center shaft 70 in a fixed manner and engage with every transmission gear 69 respectively, so when the transmission gear 69 rotates, it will drive the teeth 72 to rotate, thereby making the center shaft 70 to rotate together with it. A toothed transmission part 73 is arranged at the top end of the center shaft 70 in a fixed manner, upwardly passes through the through hole 62 of the gear surface cover 61 and then enters the shaft sleeve 22 of the container 20, while the teeth 72 at the lower end of the center shaft 70 are between the gear surface cover 61 and the gear bottom cover 65.

A disc-like chassis 50 is arranged under the container 20, and one circle of teeth 52 are arranged on the inner wall of the chassis 50 in the peripheral direction and engage with every transmission gear 69. In this way, when the chassis 50 rotates, it may actuate the transmission gears 69 engaging with its teeth 52, and drive the center shaft 70 to rotate by dint of the teeth 72 of the center shaft 70. The external surface of the chassis 50 has anti-skid patterns 51. Preferably, the anti-skid patterns 51 are made of soft plastic and cover the external surface of the chassis 50 to make for the rotation rather than slide of the chassis 50 relative to the support object.

A locating column 53 is arranged in the middle of the chassis 50. It is extended upwardly from the bottom wall of the chassis 50 along the axial direction of the chassis 50 as shown in FIG. 8. A locating hole 68 is arranged in the middle part of the gear bottom cover 65, and a locating column 53 may be inserted into the locating hole 68, thereby realizing relative locating of the chassis 50 and the gear bottom cover 65. A plurality of mutually separated resilient finger-like parts 531 are formed at the top of the locating column 53, each of the finger-like parts 531 has a teethed head, and an annular flange 681 protruding inwardly from the body in a circumferential direction is arranged inside the locating hole 68, and engaged with the toothed heads of the finger-like parts 531 in the period of assembly. The coupling between the locating column 53 and the locating hole 68 may prevent the chassis 50 from falling off from the gear bottom cover 65, but it does not limit the circumferential rotation of the chassis 50 relative to the gear bottom cover 65, so the relative rotation between the chassis 50 and the container 20 is realized once the relative rotation between the chassis 50 and the gear component 60 is realized.

A knife rest component is arranged inside the container 20. In this embodiment, the knife rest component comprises a knife rest 30 and a cleaning scraper 40 on the knife rest 30. As shown in FIG. 3, the knife rest 30 has a cylindrical body 31, a plurality of blades 32 are arranged at different heights of the peripheral wall of the body 31, and each blade 32 is connected to the body 31 via a connector 33 in a fixed manner. When the body 31 rotates, it may drive the blades 32 to rotate inside the container 20 and around the axis of the knife rest 30.

The cleaning scraper 40 is between the knife rest 30 and the top cover 15 and adjacent to the lower surface of the top cover 15. As shown in FIG. 6, a locating column 41 is arranged at the top end of the cleaning scraper 40, a plurality of mutually separated resilient finger-like parts are formed at the top, each finger-like part has a toothed head, a locating hole 19 is arranged in the middle of the top cover 15, and the locating column 41 may be inserted into the locating hole 19. An annular flange protruding inwardly from the body in a circumferential direction is arranged inside the locating hole 19 and engaged with the toothed heads of the finger-like parts of the locating column 41 in the period of assembly and may be dismounted if needed, to make for cleaning or repair. The cleaning scraper 40 has two scraping pieces 42 on a straight line, and the ends of every scraping piece 42 are bent into bent portions 43. Preferably, the bent portions 43 are adjacent to the inner wall of the container 20. In this way, the cleaning scraper 40 may scrape the food on the inner wall of the container 20, particularly the food accumulated on the lower surface of the top cover 15 and the food on the inner wall of the container 20, and avoid food accumulating on the inner surface of the top cover 15 and the inner wall of the container 20.

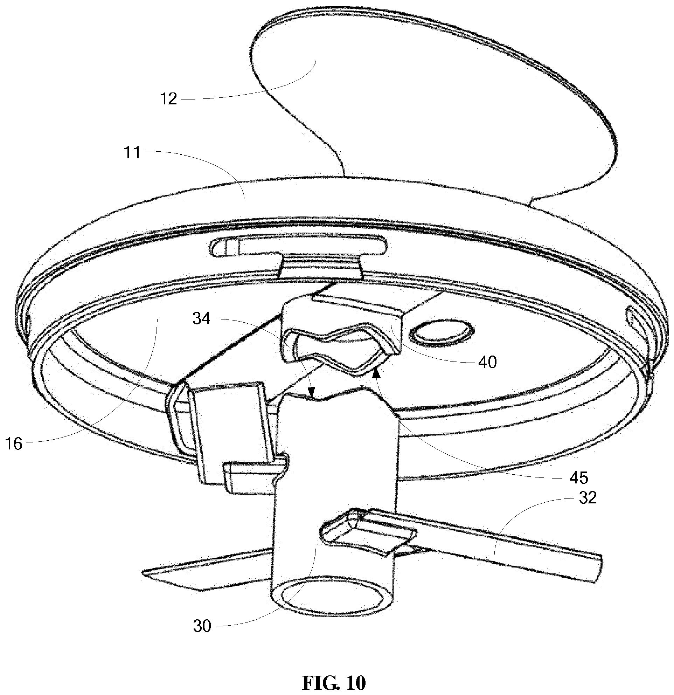

The cleaning scraper 40 rotates together with the knife rest 30, as shown in FIG. 10. A first transmission side 34 is arranged circumferentially at the upper end of the knife rest 30, i.e.: a plurality of heaves and slots are arranged on the first transmission side 34, and roughly in a wavy shape. A second transmission side 45 is arranged at the lower end of the cleaning scraper 40 accordingly and also has a plurality of heaves and slots roughly in a wavy shape. When the cleaning scraper 40 is mounted above the knife rest 30, the first transmission side 34 is coupled with the second transmission side 45, in other words, the heaves of the first transmission side 34 are engaged with the slots of the second transmission side 45, and the heaves of the second transmission side 45 are engaged with the slots of the first transmission side 34. Therefore, the cleaning scraper 40 may rotate together with the knife rest 30. Consequently, in the period when the blades on the knife rest 30 cut up food, the cleaning scraper 40 scrapes the food accumulated on the lower surface of the top cover 15 and on the inner wall of the container 20 to fully cut up the food.

In order to avoid damage of the knife rest 30 and the shaft sleeve 22 caused by friction between the inner wall of the knife rest 30 and the outer wall of the shaft sleeve 22 of the container 20, an anti-wear sleeve 27 is provided, which is a hollow structure with two open ends. As shown in FIG. 3, the anti-wear sleeve 27 comprises a cylindrical body 271 and an annular flange 272 extended outwardly from the upper end edge of the cylindrical body in a radial direction. The outer diameter of the annular flange 272 is greater than the outer diameter of the shaft sleeve 22, but smaller than the inner diameter of the cylindrical body 31 of the knife rest 30. The cylindrical body 271 of the anti-wear sleeve 27 is located inside the shaft sleeve 22 and allows the center shaft 70 to freely pass its inner chamber. The annular flange 272 of the anti-wear sleeve 27 is located on the top end of the shaft sleeve 22, while the anti-wear sleeve 27 is entirely received in the cylindrical body 31 of the knife rest 30.

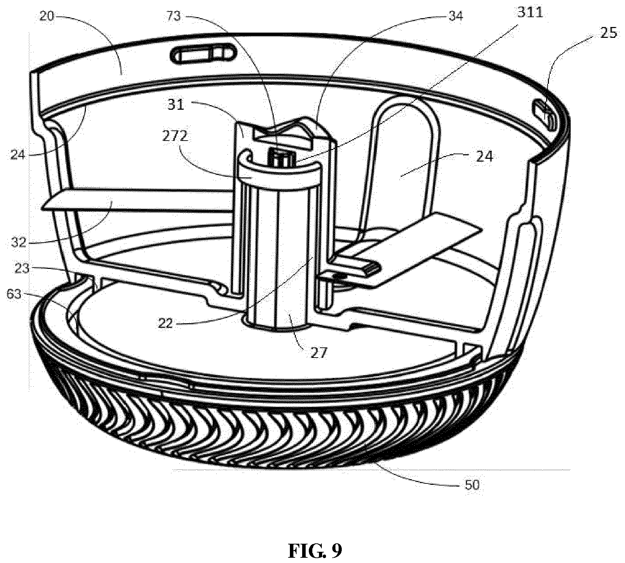

As shown in FIG. 9, after the cylindrical body 31 of the knife rest 30 jackets the anti-wear sleeve 27, the annular flange 272 of the anti-wear sleeve 27 forms a gap between the inner wall of the body 31 of the knife rest 30 and the outer wall of the shaft sleeve 22. In this way, when the knife rest 30 rotates, it will not have friction with the shaft sleeve 22 and may effectively avoid damage of the knife rest 30 and the shaft sleeve 22.

As shown in FIG. 9, the upper part of the center shaft 70 is located inside the anti-wear sleeve 27, the annular flange 272 of the anti-wear sleeve 27 is maintained at the upper end of the shaft sleeve 22, and its rest part is contained in the shaft sleeve 22, the cylindrical body 31 of the knife rest 30 encircles the annular flange 272 and the shaft sleeve 22, while the annular flange 272 is between the body 31 of the knife rest 30 and the shaft sleeve 22. The toothed transmission part 73 at the upper end of the center shaft 70 is fixed and connected to the locking grooves 311 inside the cylindrical body 31 of the knife rest in a detachable manner. When the transmission gear drives the center shaft 70 to rotate, it further drives the knife rest 30 to rotate by dint of the transmission part 73, thereby realizing rotation of the knife rest 30 relative to the shaft sleeve 22.

In order to prevent the juice inside the container 20 from flowing into the gear component 60 via the through hole of the shaft sleeve 22, the shaft sleeve 22 needs to have certain height, i.e.: the shaft sleeve 22 should be extended upwardly for a certain height from the bottom surface of the container 20.

During use of the small food cutting and blending device, the surface cover component 10 is connected to the container 20 in a detachable manner to make for handling of food materials and cleaning. The gear component 60 is fixed under the container 20, and the chassis 50 is connected to the gear component 60, contains the gear component 60 and may rotate relative to the container 20. As the chassis is in a shape of disc, arc-shaped transition is adopted between its side wall and bottom wall.

Owing to its specific structure, the small food cutting and blending device provided by the present invention may realize different means of rotation. Below examples are set to illustrate a few rotation means of the small food cutting and blending device provided by the present invention.

Example 1: The user puts the small food cutting and blending device loaded with food on a bearing surface (a plane or not a plane), holds the handle 12 of the container 20, presses the body against the bearing surface by certain force, and then pushes it out to any direction. The chassis 50 will rotate on the bearing surface, while the container 20 held in the hand of the user will be still relative to the rotating chassis 50. As the surface cover component of the small food cutting and blending device is fixed and connected to the container and the gear component, the rotation of the chassis will drive the rotation of the transmission gear engaging with it, and further drive the center shaft and the knife rest component to rotate, realizing cutting of food.

Example 2: The user holds the chassis of the small food cutting and blending device loaded with food on his palm still, rotates the container by another hand. Same as the above paragraph, the gear set will rotate, thereby driving the knife rest component to rotate.

Example 3: The user holds the handle 12, and slantly places the small food cutting and blending device on a bearing surface. Now there is only one contact point between the chassis 50 and the bearing surface. The user may hold the handle 12 and push it outwardly to form an arc trajectory. During the push, the anti-skid patterns 51 of the chassis 50 rotates as a force of friction is generated between it and the bearing surface, while the container remains still relatively, thereby realizing relative rotation between the chassis 50 and the container 20. The rotation of the chassis drives the gear set to rotate, thereby driving the knife rest 30 and the cleaning scraper 40 to rotate.

As the transmission gear of the gear component is engaged with one circle of the teeth on the inner wall of the chassis, the rotation of the chassis or the container will actuate the transmission gear, thereby driving the knife rest component to rotate and cut up food. Therefore, the user may select an operating mode, either holding the handle or rotating the chassis, according to the site environment.

During cut of food, the food that has been cut or not cut up might be accumulated at the top of the container. The cleaning scraper 40 rotating together with the knife rest 30 may scrape the food accumulated on the lower surface of the top cover 15 or on the inner wall of the container 20.

During cut of food, the user may also add olive oil, white granulated sugar or vinegar and other seasonings to the container via the opening of the handle 12. As the handle 12 is in a shape of trumpet and the cross section area of the through hole 13 at its lower end is small, the juice formed by cut vanilla and the seasoning added into the container 20 can hardly overflow from the through hole at the upper end of the container.

Obviously, the user may rotate the small food cutting and blending device by various means, and the relative rotation between the container and the chassis drives the knife rest to rotate in the container to realize cutting of food during work of the small food cutting and blending device. The operation is very simple and convenient, and the addition of seasonings is very easy. The user won't worry that sauce will flow out from the container, adding great fun to cooking.

Of course, the foregoing embodiment is only a preferred embodiment of the present invention and may have various changes in actual application. For example, one transmission gear or a number of transmission gears, rather than only four, may be arranged in the gear component, or the side wall of the container is not made of transparent material, or the coupling between the knife rest and the cleaning scraper is not realized through two transmission sides, but by coupling between pin and hole, or by other lock latch means. Such changes shall also be included in the protection scope of the claims of the present invention.

## Claims

1. A small food cutting and blending device comprising a container (20) with an open upper end, a botton wall and a cylindrical shaft sleeve (22) arranged in the middle of the bottom wall, a knife rest component inside the container (20), the knife rest component being arranged inside the container (20) and comprising a scraper (40) and a knife rest (30), the knife rest (30) comprising a cylindrical body (31) with a plurality of blades (32) being arranged on the peripheral wall of the body (31) at different height, the small food cutting and blending device further comprising:
a surface cover component (10) configured to be mounted at the upper end of the container (20) in a detachable manner;
a gear component (60) comprising at least one transmission gear (69) and fixed under the container (20) for driving the knife rest component, the gear component (60) comprising a gear surface cover (61) and a gear bottom cover (65) attached to the gear surface cover (61), the at least one transmission gear (69) being mounted between the gear bottom cover (65) and the gear surface cover (61);
a chassis (50) with a circle of teeth (52) arranged circumferentially on the inner wall of the chassis (50), the teeth (52) being configured to engage with the at least one transmission gear (69) so that the chassis (50) is connected under the container (20) and can rotate relative to the container (20);
wherein the gear component (60) further comprises a center shaft (70); teeth (72) being arranged on the bottom of the center shaft (70) and between the gear bottom cover (65) and the gear surface cover (61) and being configured to engage with the at least one transmission gear (69); a transmission part (73) being arranged on the top of the center shaft (70), being configured to pass a through hole (62) in the middle of the gear surface cover (61) and a through hole on the bottom of the container (20) in turn, and being configured to enter the container (20), and being fixed and connected to the knife rest component in a detachable manner;
the surface cover component being provided with a handle (12) at its upper end, the handle (12) having a through hole (13) communicated with the inner chamber of the container (20); and wherein
a plurality of evenly distributed keyholes (63) are circumferentially arranged adjacent to the edge of the gear surface cover (61) and a plurality of corresponding lock latches (23) are arranged on the bottom surface of the container (20), every lock latch (23) being configured to be coupled with a keyhole (63), thereby fixing the gear surface cover (61) to the bottom of the container (20).

2. The small food cutting and blending device according to claim 1, wherein the gear component (60) includes four transmission gears (69) which are arranged on the gear bottom cover (65); there being a gap between every two adjacent transmission gears (69); every transmission gear (69) engaging with the teeth (72) of the center shaft (70).

3. The small food cutting and blending device according to claim 1, wherein anti-skid patterns (51) are arranged on the external surface of the chassis (50).

4. The small food cutting and blending device according to claim 1, wherein the surface cover component (10) comprises a surface cover (11) and a top cover (15) coupled under the surface cover (11); the handle (12) being arranged on the surface cover (11); the surface cover component (10) further comprising a through hole (13, 17) which is located at the lower end of the handle (12) and runs through the surface cover (11) and the top cover (15).

5. The small food cutting and blending device according to claim 4, wherein the handle (12) is in a shape of trumpet and has an open external end of which area is greater than the area of the bottom end of the handle (12).

6. The small food cutting and blending device according to claim 1, wherein the knife rest component comprises a cylindrical knife rest (30) with a plurality of blades (32) and a cleaning scraper (40) with scraping pieces (42); the cleaning scraper (40) being fixed under the surface cover component (10) in a detachable manner and connected to the knife rest (30) and rotating together with the knife rest (30).

7. The small food cutting and blending device according to claim 6, wherein a first transmission side (34) is arranged at the upper end of the knife rest (30), and a second transmission side (45) coupled with the first transmission side (34) being arranged at the lower end of the cleaning scraper (40).

8. The small food cutting and blending device according to claim 6, wherein a shaft sleeve (22) is arranged in the middle of the container (20) and is a hollow structure with two open ends; the opening of its bottom end being throughout the bottom of the container (20); the knife rest (30) being mounted outside the shaft sleeve (22), and the transmission part (73) of the center shaft (70) being fixed inside the knife rest (30) in a detachable manner.

9. The small food cutting and blending device according to claim 8, wherein there is also an anti-wear sleeve (27) comprising a cylindrical body (271) and an annular flange (272) extended outwardly from the upper end edge of the cylindrical body (271) in a radial direction; the outer diameter of the annular flange (272) being greater than the outer diameter of the shaft sleeve (22) and smaller than the inner diameter of the cylinder (31) of the knife rest (30); the body (271) of the anti-wear sleeve (27) being stored in the shaft sleeve (22) and allowing the transmission part (73) of the center shaft (70) to pass through freely; the annular flange (272) being maintained at the top end of the shaft sleeve (22) to form a gap between the inner wall of the cylindrical knife rest (30) and the outer wall of the shaft sleeve (22).

10. The small food cutting and blending device according to claim 1, wherein a plurality of evenly distributed convex arrises (24) are arranged on the inner wall of the container (20), and protrude inwardly from the inner wall of the container (20) in a radial direction.

11. The small food cutting and blending device according to claim 1, wherein the peripheral wall (21) of the container (20) is made of transparent material.

## Patentansprüche

1. Kleine Lebensmittelschneid- und Mischvorrichtung, umfassend einen Behälter (20) mit einem offenen oberen Ende, einer unteren Wand und einer zylindrischen Wellenhülse (22), die in der Mitte der unteren Wand angeordnet ist, eine Messerauflagekomponente innerhalb des Behälters (20), wobei die Messerauflagekomponente innerhalb des Behälters (20) angeordnet ist und einen Schaber (40) und eine Messerauflage (30) umfasst, wobei die Messerauflage (30) einen zylindrischen Körper (31) mit einer Vielzahl von Klingen (32) umfasst, die auf der Umfangswand des Körpers (31) auf verschiedenen Höhen angeordnet sind, wobei die kleine Lebensmittelschneid- und Mischvorrichtung weiter Folgendes umfasst:
eine Oberflächenabdeckkomponente (10), die konfiguriert ist, um am oberen Ende des Behälters (20) auf abnehmbare Weise montiert zu sein;
eine Getriebekomponente (60), umfassend mindestens ein Übersetzungsgetriebe (69) und fixiert unter dem Behälter (20), um die Messerauflagekomponente anzutreiben, wobei die Getriebekomponente (60) eine Getriebeoberflächenabdeckung (61) und eine Getriebebodenabdeckung (65) umfasst, die an die Getriebeoberflächenabdeckung (61) befestigt ist, wobei das mindestens eine Übersetzungsgetriebe (69) zwischen der Getriebebodenabdeckung (65) und der Getriebeoberflächenabdeckung (61) montiert ist;
ein Gehäuse (50) mit einem Kreis von Zähnen (52), die umlaufend auf der inneren Wand des Gehäuses (50) angeordnet sind, wobei der Zähne (52) konfiguriert sind, um mit dem mindestens einen Übersetzungsgetriebe (69) einzugreifen, so dass das Gehäuse (50) unter dem Behälter (20) verbunden ist und sich mit Bezug auf den Behälter (20) drehen kann;
wobei die Getriebekomponente (60) weiter eine zentrale Welle (70) umfasst; wobei Zähne (72) auf der unteren Seite der zentralen Welle (70) und zwischen der Getriebebodenabdeckung (65) und der Getriebeoberflächenabdeckung (61) angeordnet sind und konfiguriert sind, um mit dem mindestens einen Übersetzungsgetriebe (69) einzugreifen; wobei ein Übersetzungsteil (73) auf der oberen Seite der zentralen Welle (70) angeordnet ist, konfiguriert, um durch ein Durchgangsloch (62) in der Mitte der Getriebeoberflächenabdeckung (61) und ein Durchgangsloch auf der unteren Seite des Behälters (20) der Reihe nach zu verlaufen und konfiguriert, um in den Behälter (20) einzutreten und an die Messerauflagekomponente auf abnehmbare Weise fixiert und verbunden zu sein,
wobei die Oberflächenabdeckkomponente mit einem Griff (12) auf ihrem oberen Ende ausgestattet ist, wobei der Griff (12) ein Durchgangsloch (13) aufweist, das mit der inneren Kammer des Behälters (20) verbunden ist, und wobei
eine Vielzahl von gleichmäßig verteilten Schlüssellöchern (63) umlaufend benachbart der Kante der Getriebeoberflächenabdeckung (61) angeordnet ist und eine Vielzahl von entsprechenden Sperrriegeln (23) auf der unteren Oberfläche des Behälters (20) angeordnet ist, wobei jeder Sperrriegel (23) konfiguriert ist, um mit einem Schlüsselloch (63) gekoppelt zu sein, wodurch die Getriebeoberflächenabdeckung (61) mit der Unterseite des Behälters (20) fixiert ist.

2. Kleine Lebensmittelschneid- und Mischvorrichtung nach Anspruch 1, wobei die Getriebekomponente (60) vier Übersetzungsgetriebe (69) beinhaltet, die auf der Getriebebodenabdeckung (65) angeordnet sind, wobei eine Lücke zwischen jeweils zwei benachbarten Übersetzungsgetrieben (69) vorhanden ist; wobei jedes Übersetzungsgetriebe (69) mit den Zähnen (72) der zentralen Welle (70) eingreift.

3. Kleine Lebensmittelschneid- und Mischvorrichtung nach Anspruch 1, wobei Antirutschmuster (51) auf der äußeren Oberfläche des Gehäuses (50) angeordnet sind.

4. Kleine Lebensmittelschneid- und Mischvorrichtung nach Anspruch 1, wobei die Oberflächenabdeckkomponente (10) eine Oberflächenabdeckung (11) und eine obere Abdeckung (15) umfasst, die unter der Oberflächenabdeckung (11) gekoppelt ist, wobei der Griff (12) auf der Oberflächenabdeckung (11) angeordnet ist; wobei die Oberflächenabdeckkomponente (10) weiter ein Durchgangsloch (13, 17) aufweist, das sich am unteren Ende des Griffs (12) befindet und durch die Oberflächenabdeckung (11) und die obere Abdeckung (15) verläuft.

5. Kleine Lebensmittelschneid- und Mischvorrichtung nach Anspruch 4, wobei der Griff (12) die Form einer Trompete aufweist und ein offenes äußeres Ende umfasst, dessen Fläche grösser als die Fläche des unteren Endes des Griffs (12) ist.

6. Kleine Lebensmittelschneid- und Mischvorrichtung nach Anspruch 1, wobei die Messerauflagekomponente eine zylindrische Messerauflage (30) mit einer Vielzahl von Klingen (32) und einem Reinigungsschaber (40) mit Schabeteilen (42) umfasst; wobei der Reinigungsschaber (40) unter der Oberflächenabdeckkomponente (10) auf entfernbare Weise fixiert ist und mit der Messerauflage (30) verbunden ist und sich zusammen mit der Messerauflage (30) dreht.

7. Kleine Lebensmittelschneid- und Mischvorrichtung nach Anspruch 6, wobei eine erste Übersetzungsseite (34) am oberen Ende der Messerauflage (30) angeordnet ist und eine zweite Übersetzungsseite (45), die mit der ersten Übersetzungsseite (34) gekoppelt ist, am unteren Ende des Reinigungsschabers (40) angeordnet ist.

8. Kleine Lebensmittelschneid- und Mischvorrichtung nach Anspruch 6, wobei eine Wellenhülse (22) in der Mitte des Behälters (20) angeordnet ist und eine hohle Struktur mit zwei offenen Enden ist; wobei sich die Öffnung ihres unteren Endes auf dem gesamten unteren Ende des Behälters (20) befindet; wobei die Messerauflage (30) auf der Außenseite der Wellenhülse (22) montiert ist und der Übersetzungsteil (73) der zentralen Welle (70) innerhalb der Messerauflage (30) auf eine abnehmbare Weise fixiert ist.

9. Kleine Lebensmittelschneid- und Mischvorrichtung nach Anspruch 8, wobei auch eine Verschleißschutzhülse (27) vorhanden ist, umfassend einen zylindrischen Körper (271) und einen ringförmigen Flansch (272), der sich nach außen von der oberen Endkante des zylindrischen Körpers (271) in einer radialen Richtung erstreckt; wobei der Außendurchmesser des ringförmigen Flansches (272) grösser als der Außendurchmesser der Wellenhülse (22) und kleiner als der Innendurchmesser des Zylinders (31) der Messerauflage (30) ist; wobei der Körper (271) der Verschleißschutzhülse (27) in der Wellenhülse (22) gelagert ist und dem Übersetzungsteil (73) der zentralen Welle (70) ermöglicht, frei dadurch zu verlaufen; wobei der ringförmige Flansch (272) am oberen Ende der Wellenhülse (22) gehalten wird, um einen Zwischenraum zwischen der inneren Wand der zylindrischen Messerauflage (30) und der äußeren Wand der Wellenhülse (22) zu bilden.

10. Kleine Lebensmittelschneid- und Mischvorrichtung nach Anspruch 1, wobei eine Vielzahl von gleichmäßig verteilten konvexen Gratlinien (24) auf der inneren Wand des Behälters (20) angeordnet ist und nach innen von der inneren Wand des Behälters (20) in einer radialen Richtung vorspringt.

11. Kleine Lebensmittelschneid- und Mischvorrichtung nach Anspruch 1, wobei die Umfangswand (21) des Behälters (20) aus transparentem Material hergestellt ist.

## Revendications

1. Petit dispositif de découpe et de mélange d'aliments, comprenant un récipient (20) avec une extrémité supérieure ouverte, une paroi de fond et un manchon d'arbre cylindrique (22) disposé au milieu de la paroi de fond, un composant de support de couteau à l'intérieur du récipient (20), le composant de support de couteau étant disposé à l'intérieur du récipient (20) et comprenant un racleur (40) et un support de couteau (30), le support de couteau (30) comprenant un corps cylindrique (31) avec une pluralité de lames (32) disposées sur la paroi périphérique du corps (31) à des hauteurs différentes, le petit dispositif de découpe et de mélange d'aliments comprenant en outre :
un composant de couvercle de surface (10) configuré pour être monté à l'extrémité supérieure du récipient (20) d'une manière détachable ;
un composant engrenage (60) comprenant au moins un pignon de transmission (69) et fixé sous le récipient (20) pour entraîner le composant de support de couteau, le composant engrenage (60) comprenant un couvercle de surface d'engrenage (61) et un couvercle inférieur d'engrenage (65) fixé au couvercle de surface d'engrenage (61), l'au moins un pignon de transmission (69) étant monté entre le couvercle inférieur d'engrenage (65) et le couvercle de surface d'engrenage (61) ;
un châssis (50) avec un cercle de dents (52) disposées de manière circonférentielle sur la paroi interne du châssis (50), les dents (52) étant configurées pour s'engrener avec l'au moins un pignon de transmission (69) de telle sorte que le châssis (50) est relié sous le récipient (20) et peut tourner par rapport au récipient (20) ;
le composant engrenage (60) comprenant en outre un arbre central (70) ; des dents (72) disposées à la partie inférieure de l'arbre central (70) et entre le couvercle inférieur d'engrenage (65) et le couvercle de surface d'engrenage (61) et configurées pour s'engrener avec l'au moins un pignon de transmission (69) ; une partie de transmission (73) disposée à la partie supérieure de l'arbre central (70), configuré pour passer à travers un trou traversant (62) au milieu du couvercle de surface d'engrenage (61) et un trou traversant sur le fond du récipient (20), et configuré pour entrer dans le récipient (20), et fixée et reliée au composant de support de couteau d'une manière détachable ;
le composant de couvercle de surface comportant une poignée (12) à son extrémité supérieure, la poignée (12) ayant un trou traversant (13) en communication avec la chambre interne du récipient (20) ; et
une pluralité de boutonnières réparties de manière uniforme (63) étant disposées de manière circonférentielle et adjacente au bord du couvercle de surface d'engrenage (61), et une pluralité de loquets de verrouillage correspondants (23) étant disposés sur la surface de fond du récipient (20), chaque loquet de verrouillage (23) étant configuré pour être couplé à une boutonnière (63), fixant ainsi le couvercle de surface d'engrenage (61) au fond du récipient (20).

2. Petit dispositif de découpe et de mélange d'aliments selon la revendication 1, dans lequel le composant engrenage (60) comprend quatre pignons de transmission (69) qui sont disposés sur le couvercle de fond d'engrenage (65) ; étant ménagé un intervalle entre chaque paire de pignons de transmission adjacents (69) ; et chaque pignon de transmission (69) s'engrenant avec les dents (72) de l'arbre central (70).

3. Petit dispositif de découpe et de mélange d'aliments selon la revendication 1, dans lequel des motifs antidérapants (51) sont disposés sur la surface externe du châssis (50).

4. Petit dispositif de découpe et de mélange d'aliments selon la revendication 1, dans lequel le composant de couvercle de surface (10) comprend un couvercle de surface (11) et un couvercle supérieur (15) couplé sous le couvercle de surface (11) ; la poignée (12) étant disposée sur le couvercle de surface (11) ; et composant de couvercle de surface (10) comprenant en outre un trou traversant (13, 17) qui est situé à l'extrémité inférieure de la poignée (12) et s'étend à travers le couvercle de surface (11) et le couvercle supérieur (15).

5. Petit dispositif de découpe et de mélange d'aliments selon la revendication 4, dans lequel la poignée (12) se présente sous la forme d'une trompette et a une extrémité externe ouverte dont la section est plus grande que la section de l'extrémité inférieure de la poignée (12) .

6. Petit dispositif de découpe et de mélange d'aliments selon la revendication 1, dans lequel le composant de support de couteau comprend un support de couteau cylindrique (30) avec une pluralité de lames (32) et un racleur de nettoyage (40) avec des organes de raclage (42) ; le racleur de nettoyage (40) étant fixé sous le composant de couvercle de surface (10) d'une manière détachable et relié au support de couteau (30) et tournant conjointement avec le support de couteau (30).

7. Petit dispositif de découpe et de mélange d'aliments selon la revendication 6, dans lequel un premier côté de transmission (34) est disposé à l'extrémité supérieure du support de couteau (30), et un second côté de transmission (45), couplé au premier côté de transmission (34), étant disposé à l'extrémité inférieure du racleur de nettoyage (40).

8. Petit dispositif de découpe et de mélange d'aliments selon la revendication 6, dans lequel un manchon d'arbre (22) est disposé au milieu du récipient (20) et est une structure creuse avec deux extrémités ouvertes ; l'ouverture de son extrémité inférieure s'étendant à travers le fond du récipient (20) ; le support de couteau (30) étant monté à l'extérieur du manchon d'arbre (22), et la partie de transmission (73) de l'arbre central (70) étant fixée à l'intérieur du support de couteau (30) d'une manière détachable.

9. Petit dispositif de découpe et de mélange d'aliments selon la revendication 8, dans lequel il y a également un manchon anti-usure (27) comprenant un corps cylindrique (271) et une bride annulaire (272) s'étendant vers l'extérieur à partir du bord d'extrémité supérieure du corps cylindrique (271) dans une direction radiale ; le diamètre externe de la bride annulaire (272) étant plus grand que le diamètre externe du manchon d'arbre (22) et plus petit que le diamètre interne du cylindre (31) du support de couteau (30) ; le corps (271) du manchon anti-usure (27) étant reçu dans le manchon d'arbre (22) et permettant à la partie de transmission (73) de l'arbre central (70) d'y passer librement à travers ; la bride annulaire (272) étant maintenue à l'extrémité supérieure du manchon d'arbre (22) pour former un intervalle entre la paroi interne du support de couteau cylindrique (30) et la paroi externe du manchon d'arbre (22).

10. Petit dispositif de découpe et de mélange d'aliments selon la revendication 1, dans lequel une pluralité d'arêtes convexes réparties de manière uniforme (24) sont disposées sur la paroi interne du récipient (20), et font saillie vers l'intérieur à partir de la paroi interne du récipient (20) dans une direction radiale.

11. Petit dispositif de découpe et de mélange d'aliments selon la revendication 1, dans lequel la paroi périphérique (21) du récipient (20) est faite de matériau transparent.
